# EUROPEAN PATENT APPLICATION

(11) **EP 4 447 578 A1**
(43) Date of publication of application: **16.10.2024**
(21) Application number: 21966862.1
(22) Date of filing: 10.12.2021
(51) Int. Cl.: H04W 72/02

(54) **THRESHOLD DETERMINATION METHOD AND DEVICE FOR CONTENTION-FREE RANDOM ACCESS (CFRA), STORAGE MEDIUM, AND APPARATUS**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Stöckeler, Ferdinand
(86) International application number: PCT/CN2021/137262
(87) International publication number: WO 2023/102944

(57) **Abstract**

The present disclosure relates to the technical field of communications, and provides a threshold determination method and device for CFRA, a storage medium, and an apparatus. The method comprises: acquiring a CBRA configuration sent by a network side device, wherein the CBRA configuration comprises at least one of a first-version CBRA configuration and a second-version CBRA configuration, and the first version is prior to the second version; in response to CFRA being triggered by UE, determining whether or not a reference signal received power (RSRP) threshold is configured in a CFRA configuration; if the RSRP threshold is not configured in the CFRA configuration, determining a target version, the target version comprising the first version and/or the second version; and determining a target RSRP threshold on the basis of an RSRP threshold in the CBRA configuration of the target version. The present disclosure provides a threshold determination method, used to determine, from a CBRA configuration, a target RSRP threshold for CFRA.

## Description

### TECHNICAL FIELD

The disclosure relates to the field of communication technologies, and in particular to a method and an apparatus/storage medium/device for determining a threshold in contention-free random access (CFRA).

### BACKGROUND

A user equipment (UE) in a wireless network system needs to perform a contention-free random access (CFRA) procedure according to a reference signal received power (RSRP) threshold.

In the related arts, when the UE triggers the CFRA, if the RSRP threshold is configured in the CFRA configuration, the CFRA procedure proceeds according to the RSRP threshold configured in the CFRA configuration; and if the RSRP threshold is not configured in the CFRA configuration, the CFRA procedure is performed according to the RSRP threshold configured in a contention-based random access (CBRA) configuration.

However, when the UE performs the CFRA procedure according to the RSRP threshold configured in the CBRA configuration, and if the UE corresponds to a plurality of CBRA configurations, the UE may not determine which RSRP threshold among the CBRA configurations is selected to perform the CFRA procedure.

### SUMMARY

The disclosure proposes a method and an apparatus/storage medium/device for determining a threshold in CFRA, to determine a target RSRP threshold for the CFRA among CBRA configurations.

According to an aspect of embodiments of the disclosure, a method for determining a threshold in CFRA is provided. The method is performed by a UE. The method includes: acquiring a CBRA configuration sent by a network side device, the CBRA configuration including at least one of a first version of a CBRA configuration and a second version of a CBRA configuration, the first version being earlier than the second version; in response to the UE triggering the CFRA, determining whether an RSRP threshold is configured in a CFRA configuration; in response to the RSRP threshold being not configured in the CFRA configuration, determining a target version, the target version including the first version and/or the second version, and determining a target RSRP threshold according to an RSRP threshold in the target version of the CBRA configuration.

According to another aspect of embodiments of the disclosure, a method for determining a threshold in CFRA is provided. The method is performed by a network side device. The method includes: sending a CBRA configuration to a UE, the CBRA configuration including at least one of a first version of a CBRA configuration and a second version of a CBRA configuration, the first version being earlier than the second version; and in response to the UE triggering the CFRA and no RSRP threshold configured in a CFRA configuration, indicating a target version to the UE, the target version including the first version and/or the second version.

According to yet another aspect of embodiments of the disclosure, an apparatus for determining a threshold in CFRA is provided. The apparatus includes: an acquiring module, configured to acquire a CBRA configuration sent by a network side device, the CBRA configuration including at least one of a first version of a CBRA configuration and a second version of a CBRA configuration, the first version being earlier than the second version; a first determining module, configured to, in response to the UE triggering the CFRA, determine whether an RSRP threshold is configured in a CFRA configuration; and a second determining module, configured to, in response to the RSRP threshold being not configured in the CFRA configuration, determine a target version, the target version including the first version and/or the second version, and determine a target RSRP threshold according to an RSRP threshold in the target version of the CBRA configuration.

According to yet another aspect of embodiments of the disclosure, an apparatus for determining a threshold in CFRA is provided. The apparatus includes: a sending module, configured to send a CBRA configuration to a UE, the CBRA configuration including at least one of a first version of a CBRA configuration and a second version of a CBRA configuration, the first version being earlier than the second version; and an indicating module, configured to, in response to the UE triggering the CFRA and no RSRP threshold configured in a CFRA configuration, indicate a target version to the UE, the target version including the first version and/or the second version.

According to yet another aspect of embodiments of the disclosure, a communication device is provided. The device includes a processor and a memory. A computer program is stored in the memory, and the processor is configured to execute the computer program stored in the memory to cause the device to perform the method according to the aspect of embodiments.

According to yet another aspect of embodiments of the disclosure, a communication device is provided. The device includes a processor and a memory. A computer program is stored in the memory, and the processor is configured to execute the computer program stored in the memory to cause the device to perform the method according to another aspect of embodiments.

According to yet another aspect of embodiments of the disclosure, a communication device is provided. The device includes a processor and an interface circuit. The interface circuit is configured to receive code instructions and transmit them to the processor; and the processor is configured to execute the code instructions to execute the method according to the aspect of embodiments.

According to yet another aspect of embodiments of the disclosure, a communication device is provided. The device includes a processor and an interface circuit. The interface circuit is configured to receive code instructions and transmit them to the processor; and the processor is configured to execute the code instructions to execute the method according to another aspect of embodiments.

According to yet another aspect of embodiments of the disclosure, a computer-readable storage medium is provided. The computer-readable storage medium is configured to store instructions, and when the instructions are executed, the method according to the aspect of embodiments is implemented.

According to yet another aspect of embodiments of the disclosure, a computer-readable storage medium is provided. The computer-readable storage medium is configured to store instructions, and when the instructions are executed, the method according to another aspect of embodiments is implemented.

In conclusion, in the method and the apparatus/storage medium/device for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

### BRIEF DESCRIPTION OF THE DRAWINGS

The above and/or additional aspects and advantages of the disclosure will become apparent and understandable from the following descriptions according to embodiments in conjunction with the accompanying drawings, in which:
FIG. 1 is a schematic flowchart of a method for determining a threshold in CFRA according to some embodiments of the disclosure.
FIG. 2a is a schematic flowchart of another method for determining a threshold in CFRA according to some embodiments of the disclosure.
FIG. 2b is a schematic flowchart of another method for determining a threshold in CFRA according to some embodiments of the disclosure.
FIG. 2c is a schematic flowchart of another method for determining a threshold in CFRA according to some embodiments of the disclosure.
FIG. 3 is a schematic flowchart of yet another method for determining a threshold in CFRA according to some embodiments of the disclosure.
FIG. 4 is a schematic flowchart of still yet another method for determining a threshold in CFRA according to some embodiments of the disclosure.
FIG. 5 is a schematic flowchart of still yet another method for determining a threshold in CFRA according to some embodiments of the disclosure.
FIG. 6 is a schematic flowchart of still yet another method for determining a threshold in CFRA according to some embodiments of the disclosure.
FIG. 7 is a schematic block diagram of an apparatus for determining a threshold in CFRA according to some embodiments of the disclosure.
FIG. 8 is a schematic block diagram of another apparatus for determining a threshold in CFRA according to some embodiments of the disclosure.
FIG. 9 is a block diagram of a UE according to some embodiments of the disclosure.
FIG. 10 is a block diagram of a network side device according to some embodiments of the disclosure.

### DETAILED DESCRIPTION

Reference will now be made in detail to embodiments, examples of which are illustrated in the accompanying drawings. The following descriptions refer to the accompanying drawings in which the same numbers in different drawings represent the same or similar elements unless otherwise represented. The implementations set forth in the following descriptions of embodiments do not represent all implementations consistent with embodiments of the disclosure. Instead, they are merely examples of apparatuses and methods consistent with aspects related to the disclosure as recited in the appended claims.

The terms used in embodiments of the disclosure are only for the purpose of describing specific embodiments, and are not intended to limit embodiments of the disclosure. The singular forms of "a" and "the" used in embodiments of the disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second, and third may be used according to the embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the word "if' as used herein may be interpreted as "when", "while" or "in response to determining".

A method and an apparatus for determining a threshold in contention-free random access (CFRA), a user equipment (UE), a network side device, and a storage medium according to embodiments of the disclosure will be described in detail below with reference to the accompanying drawings.

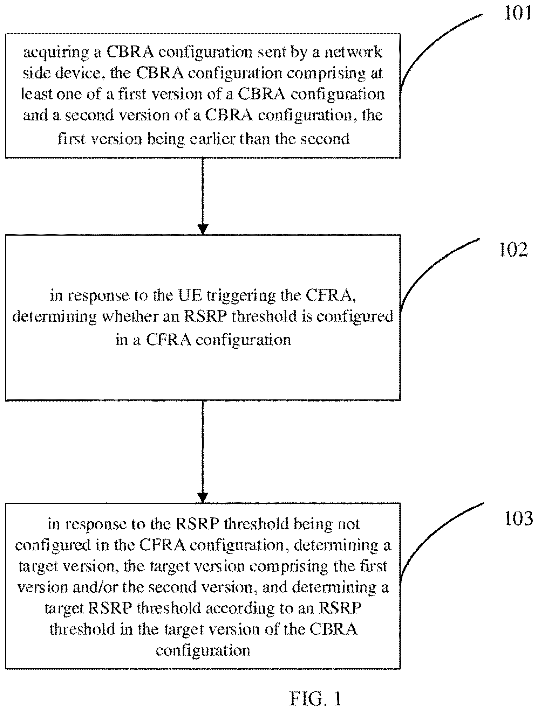

FIG. 1 is a schematic flowchart of a method for determining a threshold in CFRA according to some embodiments of the disclosure. The method is performed by a UE. As illustrated in FIG. 1, the method for determining a threshold in CFRA may include the following steps.

Step 101: a contention-based random access (CBRA) configuration sent by a network side device is acquired. The CBRA configuration includes at least one of a first version of a CBRA configuration and a second version of a CBRA configuration. The first version is earlier than the second version.

According to embodiments of the disclosure, the UE may be a device that provides speech and/or data connectivity for a user. The terminal device may communicate with one or more core networks via a radio access network (RAN). The UE may be an Internet of Things terminal, such as a sensor device, a mobile phone (or a "cellular" phone), and a computer having an Internet of Things terminal, for example, a fixed, portable, pocket-sized, handheld, computer built-in, or vehicle-mounted device. For example, it may be a station (STA), a subscriber unit, a subscriber station, a mobile station, a mobile, a remote station, an access point, a remote terminal, an access terminal, a user terminal, or a user agent. Alternatively, the UE may also be a device of an unmanned aerial vehicle. Alternatively, the UE may also be a vehicle-mounted device, for example, it may be a trip computer with a wireless communication function, or a wireless terminal connected externally to the trip computer. Alternatively, the UE may also be a roadside device, for example, it may be a street lamp, a signal lamp, or other roadside devices with a wireless communication function.

According to embodiments of the disclosure, the first version includes at least one version, and one version in the first version corresponds to at least one CBRA configuration. The second version includes at least one version, and one version in the second version corresponds to at least one CBRA configuration. For example, according to embodiments of the disclosure, the first version may include Release-15 and/or Release-16, and the second version may include Release-17.

It should be noted that, according to embodiments of the disclosure, each CBRA configuration of the second version may correspond to a feature combination. The feature combination may include: a combination of one or more of: a reduced capability (redcap) feature, a small data transmission (SDT) feature, a slice feature, or a coverage enhancement (CE) feature.

According to embodiments of the disclosure, a relationship between the first version of the CBRA configuration and the second version of the CBRA configuration includes at least one of: the second version of the CBRA configuration independently being configured with the same RSRP threshold as configured in the first version of the CBRA configuration; the second version of the CBRA configuration independently being configured with the RSRP threshold different from that configured in the first version of the CBRA configuration; or the second version of the CBRA configuration being not configured with the RSRP threshold but reusing the RSRP threshold configured in the first version of the CBRA configuration.

According to embodiments of the disclosure, the RSRP threshold may include at least one of: a supplementary uplink (SUL) selection threshold (for example, rsrp-ThresholdSSB-SUL); or a synchronization signal block (SSB) selection threshold (for example, RSRP-ThresholdSSB, and/or, msgA-RSRP-ThresholdSSB).

Further, according to embodiments of the disclosure, the CBRA configuration may include at least one of: a 2-step CBRA configuration; or a 4-step CBRA configuration.

According to embodiments of the disclosure, acquiring the CBRA configuration sent by the network side device includes: acquiring the CBRA configuration sent by the network side device through a system message.

According to embodiments of the disclosure, the system message may be any system information issued by the network side device. For example, the system information may be a system information block (SIB) x, where x is a positive integer, and the SIB x may be an existing system message or a system message that will appear in the future or a newly defined system message. For example, according to embodiments of the disclosure, the SIB x may be the existing SIB 1.

Further, according to embodiments of the disclosure, names of fields carrying the first version of the CBRA configuration and the second version of the CBRA configuration may be the same. When the names of the fields carrying the first version of the CBRA configuration and the second version of the CBRA configurations are the same, the suffixes need to be set for the fields carrying different versions of the CBRA configurations to indicate the versions corresponding to the CBRA configurations carried by the fields.

According to embodiments of the disclosure, when the CBRA configuration is a 4-step CBRA configuration, the fields carrying the first version of the CBRA configuration and the second version of the CBRA configuration may be distinguished by different suffixes. For example, according to embodiments of the disclosure, the field carrying the second version of the CBRA configuration may be: RACH-ConfigCommon-r17.

According to embodiments of the disclosure, when the CBRA configuration is a 2-step CBRA configuration, the field carrying the second version of the CBRA configuration may be distinguished from the first version of the CBRA configuration by a different suffix. For example, according to embodiments of the disclosure, the field carrying the second version of the CBRA configuration may be: RACH-ConfigCommonTwoStepRA-r17.

According to other embodiments of the disclosure, the field carrying the second version of the CBRA configuration may be distinguished from the first version of the CBRA configuration by using a different name. For example, according to embodiments of the disclosure, when the CBRA configuration is a 4-step CBRA configuration, the second version of the CBRA configuration may be carried in a new field. For example, the new field may be, such as RACH-ConfigCommonExt-r17. According to embodiments of the disclosure, when the CBRA configuration is a 2-step CBRA configuration, the second version of the CBRA configuration may be carried in a new field. For example, the new field may be: RACH-ConfigCommonTwoStepRAExt-r17.

Step 102, in response to the UE triggering the CFRA, it is determined whether an RSRP threshold is configured in a CFRA configuration.

According to embodiments of the disclosure, the UE triggering the CFRA may include at least one of: triggering the CFRA according to a beam failure recovery (BFR); triggering the CFRA according to a system information (SI) request; or triggering the CFRA according to a handover.

Step 103, in response to the RSRP threshold being not configured in the CFRA configuration, a target version is determined, in which the target version includes the first version and/or the second version, and a target RSRP threshold is determined according to an RSRP threshold in the target version of the CBRA configuration.

According to embodiments of the disclosure, the manner of determining the target version may include at least one of: determining the target version according to an indication of the network side device; determining the target version according to a protocol agreement; determining the target version according to a UE capability; or determining the target version by the UE autonomously.

According to embodiments of the disclosure, the manner of determining the target version may include at least one of: determining the first version as the target version; determining the second version as the target version; or determining the first version and the second version as the target version.

According to embodiments of the disclosure, the above-mentioned manner of "determining the target version" and the content included in the finally determined "target version" may be combined arbitrarily.

For example, according to embodiments of the disclosure, when the target version is determined according to the protocol agreement, the first version may be determined as the target version according to the protocol agreement, or the second version may be determined as the target version according to the protocol agreement, or the first version and the second version may be determined as the target version according to the protocol agreement.

According to other embodiments of the disclosure, when the UE autonomously determines the target version, the UE may autonomously determine the second version as the target version, or the UE may autonomously determine the first version as the target version, or the UE may also autonomously determine the first version and the second version as the target version.

According to other embodiments of the disclosure, when the target version is determined according to the indication of the network side device, the second version may be determined as the target version according to the indication of the network side device, or the first version may be determined as the target version according to the indication of the network side device, or the first version and the second version may also be determined as the target version according to the indication of the network side device.

According to other embodiments of the disclosure, when the target version is determined according to the UE capability, the second version may be determined as the target version according to the UE capability, or the first version may be determined as the target version according to the UE capability, or the first release and the second release may also be determined as the target version according to the UE capability.

According to other embodiments of the disclosure, when there is no indication from the network side device or the second version of the CBRA configuration may be not recognized and read according to the UE capability, the first version may be determined as the target version.

According to embodiments of the disclosure, in any of the above "acquiring the target version indicated by the network side device", "determining the target version according to the protocol agreement", "determining the target version according to the UE capability", and "determining the target version by the UE autonomously ", there is no mutually exclusive relationship among them, and they may cooperate with each other.

For example, according to embodiments of the disclosure, the protocol agreement may stipulate that the UE determines autonomously that: the second version is determined as the target version.

Further, according to embodiments of the disclosure, after the UE determines the target version, it may determine the target RSRP threshold according to the RSRP threshold in the target version of the CBRA configuration. It should be noted that, according to embodiments of the disclosure, when the type of the target RSRP threshold is determined to be different, the selected CBRA configuration may also be different. In detail, when the target RSRP threshold to be determined is the SUL selection threshold, the SUL selection threshold may be determined according to the target version of the 4-step CBRA configuration; when the target RSRP threshold to be determined is the SSB selection threshold of the 2-step CFRA, the SSB selection threshold may be determined according to the target version of the 2-step CBRA configuration; and when the target RSRP threshold to be determined is the SSB selection threshold of the 4-step CFRA, the SSB selection threshold may be determined according to the target version of the 4-step CBRA configuration.

Further, it should be noted that according to embodiments of the disclosure, the target version may correspond to one or more CBRA configurations. The manner of determining the target RSRP threshold when the target version corresponds to one CBRA configuration is different from the manner of determining the target RSRP threshold when the target version corresponds to a plurality of CBRA configurations, which will be described in detail in subsequent embodiments.

In conclusion, in the method for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

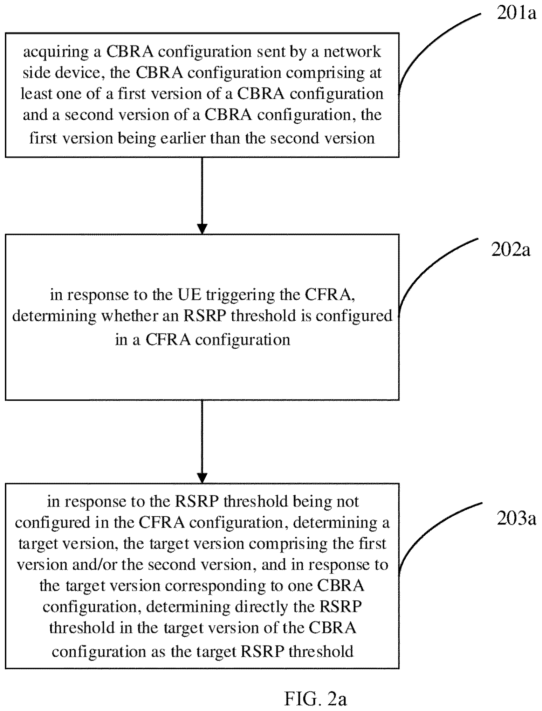

FIG. 2a is a schematic flowchart of another method for determining a threshold in CFRA according to some embodiments of the disclosure. The method is executed by a UE. As illustrated in FIG. 2a, the method for determining a threshold in CFRA may include the following steps.

Step 201a, a CBRA configuration sent by a network side device is acquired. The CBRA configuration includes at least one of a first version of a CBRA configuration and a second version of a CBRA configuration. The first version is earlier than the second version.

Step 202a, in response to the UE triggering the CFRA, it is determined whether an RSRP threshold is configured in a CFRA configuration.

For other introduction about step 201a-step 202a, reference may be made to the descriptions of the above-mentioned embodiments, and details are not repeated herein according to the embodiments of the disclosure.

Step 203a, in response to the RSRP threshold being not configured in the CFRA configuration, a target version is determined, in which the target version includes the first version and/or the second version; and in response to the target version corresponding to one CBRA configuration, the RSRP threshold in the target version of the CBRA configuration is determined directly as the target RSRP threshold.

In conclusion, in the method for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

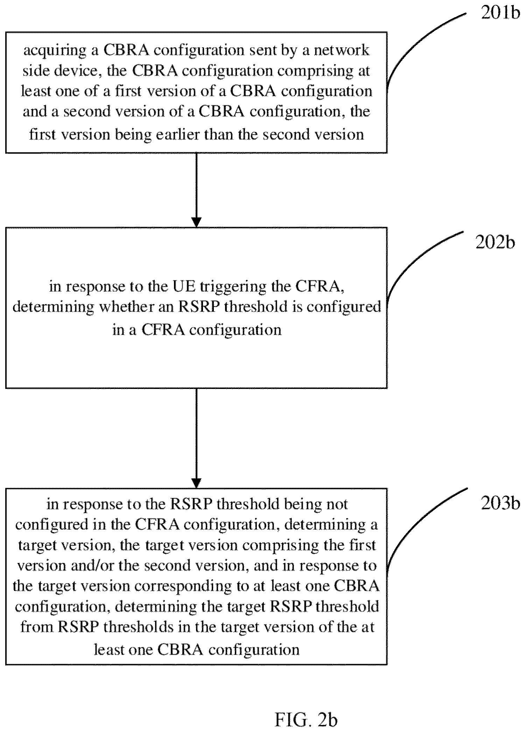

FIG. 2b is a schematic flowchart of another method for determining a threshold in CFRA according to some embodiments of the disclosure. The method is executed by a UE. As illustrated in FIG. 2b, the method for determining a threshold in CFRA may include the following steps.

Step 201b, a CBRA configuration sent by a network side device is acquired. The CBRA configuration includes at least one of a first version of a CBRA configuration and a second version of a CBRA configuration. The first version is earlier than the second version.

Step 202b, in response to the UE triggering the CFRA, it is determined whether an RSRP threshold is configured in a CFRA configuration.

Step 203b, in response to the RSRP threshold being not configured in the CFRA configuration, a target version is determined, in which the target version includes the first version and/or the second version; and in response to the target version corresponding to at least one CBRA configuration, the target RSRP threshold is determined from RSRP thresholds in the target version of the at least one CBRA configuration.

According to embodiments of the disclosure, the manner for determining the target RSRP threshold from the RSRP thresholds in the target version of the at least one CBRA configuration may include at least one of the following.

Manner 1: determining the target RSRP threshold from the RSRP thresholds in the target version of the at least one CBRA configuration according to an indication of the network side device.

Manner 2: determining the target RSRP threshold from the RSRP thresholds in the target version of the at least one CBRA configuration according to a UE capability.

It should be noted that, according to embodiments of the disclosure, the execution premise of the manner 2 is that: the target version includes the second version and reading the second version of the CBRA configuration is limited by the UE capability. Therefore, according to embodiments of the disclosure, determining the target RSRP threshold from the RSRP thresholds in the target version of the at least one CBRA configuration according to the UE capability may include: determining to read the second version of the at least one CBRA configuration according to the UE capability, and determining the target RSRP threshold from the RSRP threshold(s) of the read CBRA configuration(s).

It should be noted that, in the second version of the CBRA configuration, each CBRA configuration corresponds to the feature combination in the second version, and for a UE that does not support a certain feature combination, it may not be able to read the CBRA configuration corresponding to the feature combination, so the RSRP threshold may not be used.

For example, according to embodiments of the disclosure, it is assumed that the target version includes the second version, and the second version includes CBRA configuration 1, CBRA configuration 2, and CBRA configuration 3. The feature combinations corresponding to the CBRA configuration 1, CBRA configuration 2, and CBRA configuration 3 are: Redcap, Slice, and CE, respectively. The feature combination supported by the UE is: Slice. At this time, the target RSRP threshold may be determined from the RSRP threshold in the CBRA configuration 2.

Manner 3: determining the RSRP threshold in the first version of the CBRA configuration as the target RSRP threshold.

According to embodiments of the disclosure, the execution premise of the manner 3 is that: the target version includes the first version, and the first version corresponds to one CBRA configuration.

According to embodiments of the disclosure, when the UE does not receive an indication from the network side device, or the UE capability does not support the second version of the CBRA configuration, the manner 3 is used by default, that is, the RSRP threshold in the first version of the CBRA configuration is determined as the target RSRP threshold.

Manner 4: determining the target RSRP threshold from the RSRP thresholds in the target version of the at least one CBRA configuration according to a predefined rule

According to embodiments of the disclosure, the predefined rule may include at least one of: determining a maximum RSRP threshold as the target RSRP threshold; or determining a minimum RSRP threshold as the target RSRP threshold.

Manner 5: determining by the UE autonomously the target RSRP threshold from the RSRP thresholds in the target version of the at least one CBRA configuration.

It should be noted that, according to embodiments of the disclosure, the above manner 1 to manner 5 may be used alone or in combination to ensure that a unique target RSRP threshold is ultimately determined.

For example, according to embodiments of the disclosure, when the UE capability includes only one, and the one UE capability supports a certain feature combination, it is possible to read the CBRA configuration corresponding to the feature combination, so that a unique target RSRP threshold may be determined according to manner 2, that is, a unique target RSRP threshold is determined from the RSRP thresholds in the target version of the at least one CBRA configuration according to the UE capability.

According to other embodiments of the disclosure, the UE capability supports reading a plurality of CBRA configurations. At this time, the plurality of RSRP thresholds may be determined according to the above manner 2, and on this basis, it may further determine a unique target RSRP threshold from the plurality of RSRP thresholds according to manner 1, manner 4, manner 5, or protocol agreement.

In conclusion, in the method for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

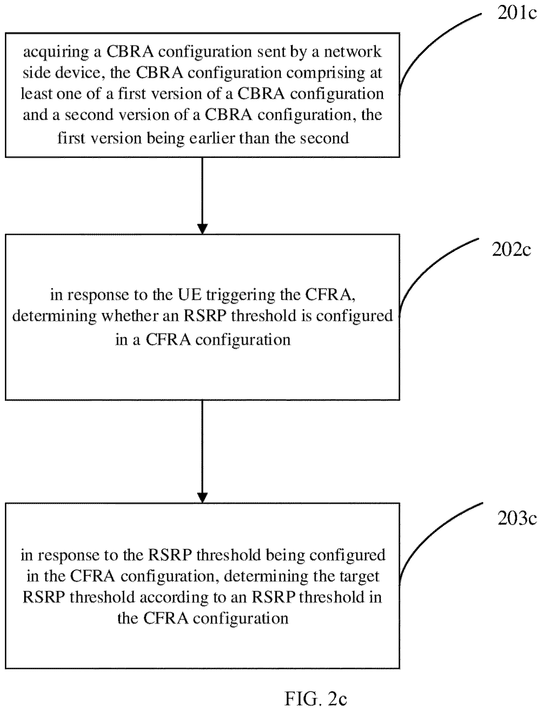

FIG. 2c is a schematic flowchart of another method for determining a threshold in CFRA according to some embodiments of the disclosure. The method is executed by a UE. As illustrated in FIG. 2c, the method for determining a threshold in CFRA may include the following steps.

Step 201c, a CBRA configuration sent by a network side device is acquired. The CBRA configuration includes at least one of a first version of a CBRA configuration and a second version of a CBRA configuration. The first version is earlier than the second version.

Step 202c, in response to the UE triggering the CFRA, it is determined whether an RSRP threshold is configured in a CFRA configuration.

Step 203c, in response to the RSRP threshold being configured in the CFRA configuration, a target RSRP threshold is determined according to an RSRP threshold in the CFRA configuration.

According to embodiments of the disclosure, the manner for determining the target RSRP threshold according to the RSRP threshold in the CFRA configuration may include: determining directly the RSRP threshold in the CFRA configuration as the target RSRP threshold.

For the detailed introduction of steps 201c-203c, reference may be made to the descriptions of the foregoing embodiments, and the embodiments of the disclosure will not repeat them herein.

In conclusion, in the method for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

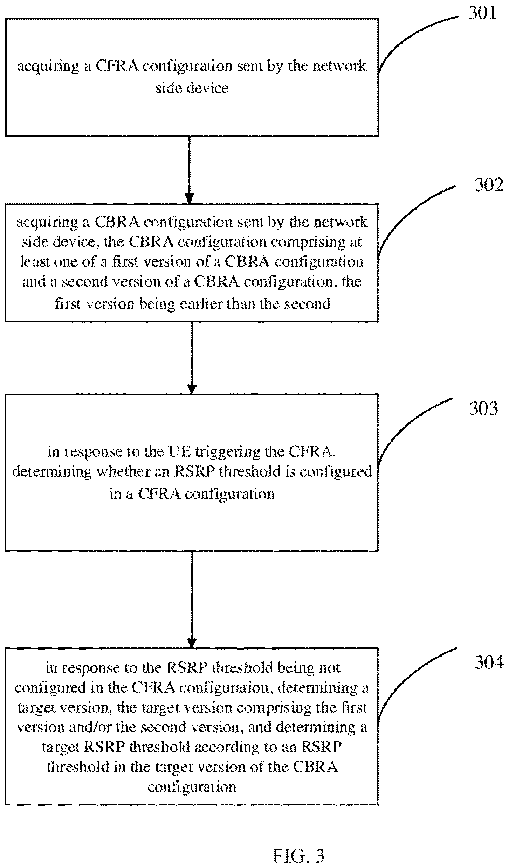

FIG. 3 is a schematic flowchart of yet another method for determining a threshold in CFRA according to some embodiments of the disclosure. The method is executed by a UE. As illustrated in FIG. 3, the method for determining a threshold in CFRA may include the following steps.

Step 301, a CFRA configuration sent by the network side device is acquired.

According to embodiments of the disclosure, the manner for acquiring the CFRA configuration sent by the network side device may include: acquiring the CFRA configuration sent by the network side device through a system message.

According to embodiments of the disclosure, the system message may be any system information issued by the network side device. For example, the system information may be an SIB x, where x is a positive integer, and the SIB x may be an existing system message or a system message that will appear in the future or a newly defined system message. For example, according to embodiments of the disclosure, the SIB x may be the existing SIB 1.

Step 302, a CBRA configuration sent by the network side device is acquired. The CBRA configuration includes at least one of a first version of a CBRA configuration and a second version of a CBRA configuration. The first version is earlier than the second version.

Step 303, in response to the UE triggering the CFRA, it is determined whether an RSRP threshold is configured in a CFRA configuration.

Step 304, in response to the RSRP threshold being not configured in the CFRA configuration, a target version is determined, in which the target version includes the first version and/or the second version, and a target RSRP threshold is determined according to an RSRP threshold in the target version of the CBRA configuration.

For the detailed introduction of steps 301-304, reference may be made to the descriptions of the above-mentioned embodiments, and details are not repeated herein according to the embodiments of the disclosure.

In conclusion, in the method for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

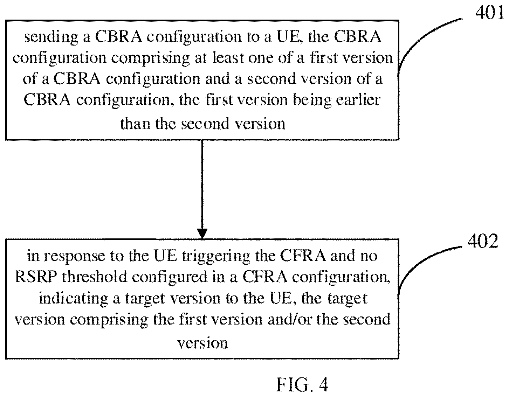

FIG. 4 is a schematic flowchart of still yet another method for determining a threshold in CFRA according to some embodiments of the disclosure. The method is executed by a network side device. As illustrated in FIG. 4, the method for determining a threshold in CFRA may include the following steps.

Step 401, a CBRA configuration is sent to a UE. The CBRA configuration includes at least one of a first version of a CBRA configuration and a second version of a CBRA configuration. The first version is earlier than the second version.

According to embodiments of the disclosure, sending the CBRA configuration to the UE may include: sending the CBRA configuration to the UE through a system message.

According to embodiments of the disclosure, the CBRA configuration may include at least one of: a 2-step CBRA configuration; or a 4-step CBRA configuration.

Step 402, in response to the UE triggering the CFRA and no RSRP threshold configured in a CFRA configuration, a target version is indicated to the UE. The target version includes the first version and/or the second version.

According to embodiments of the disclosure, the first version includes at least one version, and one version in the first version corresponds to at least one CBRA configuration; the second version includes at least one version, and one version in the second version corresponds to at least one CBRA configuration.

According to embodiments of the disclosure, a relationship between the first version of the CBRA configuration and the second version of the CBRA configuration includes at least one of: the second version of the CBRA configuration being independently configured with a same RSRP threshold as configured in the first version of the CBRA configuration; the second version of the CBRA configuration being independently configured with an RSRP threshold different from that configured in the first version of the CBRA configuration; or the second version of the CBRA configuration being not configured with an RSRP threshold but reusing an RSRP threshold configured in the first version of the CBRA configuration.

According to embodiments of the disclosure, the threshold includes at least one of: an SUL selection threshold; or an SSB selection threshold.

According to embodiments of the disclosure, the target version may include at least one of: determining the first version as the target version; determining the second version as the target version; or determining the first version and the second version as the target version.

According to embodiments of the disclosure, the CFRA includes at least one of: CFRA triggered according to a BFR; CFRA triggered according to an SI request; or CFRA triggered according to a handover.

According to embodiments of the disclosure, a type of the CFRA includes at least one of: 2-step CFRA; or 4-step CFRA.

In addition, for the other detailed introduction about the above steps 401-402, reference may be made to the descriptions of the above embodiments, and the embodiments of the disclosure will not repeat them herein.

In conclusion, in the method for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

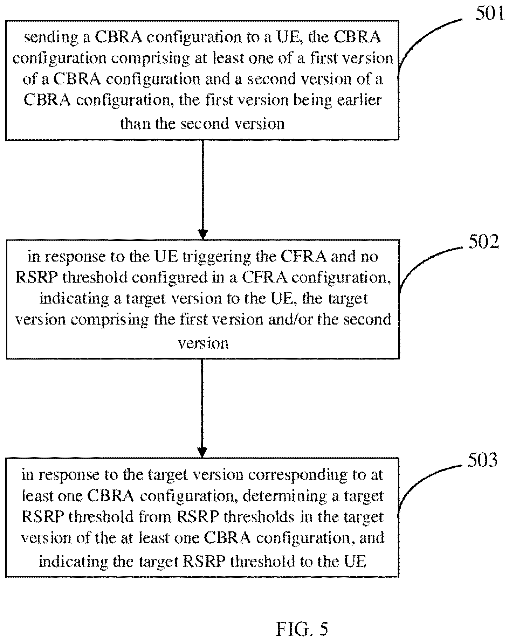

FIG. 5 is a schematic flowchart of still yet another method for determining a threshold in CFRA according to some embodiments of the disclosure. The method is executed by a network side device. As illustrated in FIG. 5, the method for determining a threshold in CFRA may include the following steps.

Step 501, a CBRA configuration is sent to a UE. The CBRA configuration includes at least one of a first version of a CBRA configuration and a second version of a CBRA configuration. The first version is earlier than the second version.

Step 502, in response to the UE triggering the CFRA and no RSRP threshold configured in a CFRA configuration, a target version is indicated to the UE. The target version includes the first version and/or the second version.

Step 503, in response to the target version corresponding to at least one CBRA configuration, a target RSRP threshold is determined from RSRP thresholds in the target version of the at least one CBRA configuration, and the target RSRP threshold is indicated to the UE.

According to embodiments of the disclosure, the manner for the network side device to determine the target RSRP threshold from RSRP thresholds in the target version of the at least one CBRA configuration may include at least one of the following: determining the target RSRP threshold from RSRP thresholds in the target version of the at least one CBRA configuration according to the UE capability; determining the target RSRP threshold from RSRP thresholds in the target version of the at least one CBRA configuration according to a predefined rule; or determining by the network side device autonomously the target RSRP threshold from RSRP thresholds in the target version of the at least one CBRA configuration.

For the detailed introduction of the above-mentioned steps 501-503, reference may be made to the descriptions of the above-mentioned embodiments, and the embodiments of the disclosure will not repeat them herein.

In conclusion, in the method for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

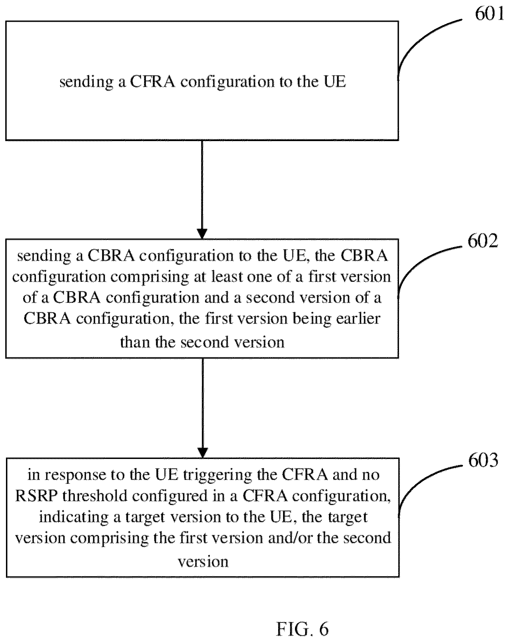

FIG. 6 is a schematic flowchart of still yet another method for determining a threshold in CFRA according to some embodiments of the disclosure. The method is executed by a network side device. As illustrated in FIG. 6, the method for determining a threshold in CFRA may include the following steps.

Step 601, a CFRA configuration is sent to the UE.

Step 602, a CBRA configuration is sent to the UE. The CBRA configuration includes at least one of a first version of a CBRA configuration and a second version of a CBRA configuration. The first version is earlier than the second version.

Step 603, in response to the UE triggering the CFRA and no RSRP threshold configured in a CFRA configuration, a target version is indicated to the UE. The target version includes the first version and/or the second version.

For the detailed introduction of steps 601-603, reference may be made to the descriptions of the foregoing embodiments, and the embodiments of the disclosure will not repeat them herein.

In conclusion, in the method for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

In combination with the above content, examples are given to methods for determining different types of target RSRP thresholds.

Example 1: the UE that triggers the CFRA needs to determine the SUL selection threshold (rsrp-ThresholdSSB-SUL). The determination method includes the following steps.

If the serving cell is configured with the SUL, the terminal that triggers the CFRA determines the SUL selection threshold (rsrp-ThresholdSSB-SUL) according to the network configuration, and then determines whether to select the SUL carrier.

The CFRA includes any of: the CFRA triggered by the BFR; the CFRA triggered by the SI request; or the CFRA triggered by the handover.

The network configuration includes at least one of: the first version of the 4-step CBRA configuration (RACH-ConfigCommon), or the second version of one or more 4-step CBRA configurations.

The possible IE design of the second version of the 4-step CBRA configuration: modify the suffix, namely: RACH-ConfigCommon-r17.

The possible IE design for the second version of the 4-step CBRA configuration: modify the IE name, namely: RACH-ConfigCommonExt-R17.

The determination of the SUL selection threshold may be any of the following methods.

Method 1: the terminal uses the SUL selection threshold indicated in the first version of the 4-step CBRA configuration (RACH-ConfigCommon).

Method 2: the terminal uses the SUL selection threshold indicated in the second version of the 4-step CBRA configuration.

Method 3: the terminal uses the SUL selection threshold indicated in the first version of the 4-step CBRA configuration and the second version of the 4-step CBRA configuration issued the base station to determine.

Furthermore, for any of the above methods, if there are a plurality of SUL selection thresholds, it may be further determined by any of the following methods.

Method a: the terminal determines which SUL selection threshold indicated in the CBRA configuration to use according to the network indication and/or the terminal capability. If the network does not indicate or the terminal capability does not support, the SUL selection threshold indicated in the first version of the 4-step CBRA configuration (RACH-ConfigCommon) is used.

Method b: according to a predefined selection rule, such as the maximum or minimum SUL selection threshold is used.

Method c: depends on a terminal implementation.

Example 2: the UE that triggers the 2-step CFRA needs to determine the SSB selection threshold (msgA-RSRP-ThresholdSSB). The determination method includes the following steps.

If the network configures the 2-step CFRA resource associated with the SSB, the terminal selects the SSB according to the SSB selection threshold (msgA-RSRP-ThresholdSSB) configured by the network, and then determines the CFRA resource.

The network configuration includes at least one of: the first version of the 2-step CBRA configuration (RACH-ConfigCommonTwoStepRA-rl6); or the second version of one or more 2-step CBRA configurations.

The possible IE design for the second version of the 2-step CBRA configuration: modify the suffix, namely: RACH-ConfigCommonTwoStepRA-r17.

The possible IE design for the second version of the 2-step CBRA configuration: modify the IE name, namely: RACH-ConfigCommonTwoStepRAExt-R17.

The determination of the SSB selection threshold may be any of the following methods.

Method 1: the terminal uses the SSB selection threshold indicated in the first version of the 2-step CBRA configuration (RACH-ConfigCommonTwoStepRA-r16).

Method 2: the terminal uses the SSB selection threshold indicated in the second version of the 2-step CBRA configuration.

Method 3: the terminal uses the SSB selection threshold indicated in the first version of the 2-step CBRA configuration and the second version of the 2-step CBRA configuration issued by the base station to determine.

Furthermore, for any of the above methods, if there are a plurality of SSB selection thresholds, it may be further determined by any of the following methods.

Method a: the terminal determines which SSB selection threshold indicated in the CBRA configuration to use according to the network indication and/or the terminal capability. If the network does not indicate or the terminal capability does not support, the SSB selection threshold indicated in the first version of the 2-step CBRA configuration (RACH-ConfigCommon) is used.

Method b: according to a predefined selection rule, such as the maximum or minimum SSB selection threshold is used.

Method c: depends on a terminal implementation.

Example 3: the UE that triggers the 4-step CFRA needs to determine the SSB selection threshold (RSRP-ThresholdSSB). The determination method includes the following steps.

If the network configures the 4-step CFRA resource associated with the SSB, the terminal selects the SSB according to the SSB selection threshold (RSRP-ThresholdSSB) configured by the network, and then determines the CFRA resource.

The 4-step CFRA includes any of: the 4-step CFRA triggered by the SI request; the 4-step CFRA triggered by the handover.

The network configuration includes at least one of: the first version of the 4-step CBRA configuration (RACH-ConfigCommon); or the second version of one or more 4-step CBRA configurations.

The possible IE design for the second version of the 4-step CBRA configuration: modify the suffix, namely: RACH-ConfigCommon-r17.

The possible IE design for the second version of the 4-step CBRA configuration: modify the IE name, namely: RACH-ConfigCommonExt-R17.

The determination of the SSB selection threshold may be any of the following methods.

Method 1: the terminal uses the SSB selection threshold indicated in the first version of the 4-step CBRA configuration (RACH-ConfigCommon).

Method 2: the terminal uses the SSB selection threshold indicated in the second version of the 4-step CBRA configuration.

Method 3: the terminal uses the SSB selection threshold indicated in the first version of the 4-step CBRA configuration and the second version of the 4-step CBRA configuration issued by the base station to determine.

Furthermore, for any of the above methods, if there are a plurality of SSB selection thresholds, it may be further determined by any of the following methods.

Method a: the terminal determines which SSB selection threshold indicated in the CBRA configuration to use according to the network indication and/or the terminal capability. If the network does not indicate or the terminal capability does not support, the SSB selection threshold indicated in the first version of the 4-step CBRA configuration (RACH-ConfigCommon) is used.

Method b: according to a predefined selection rule, such as the maximum or minimum SSB selection threshold is used.

Method c: depends on a terminal implementation.

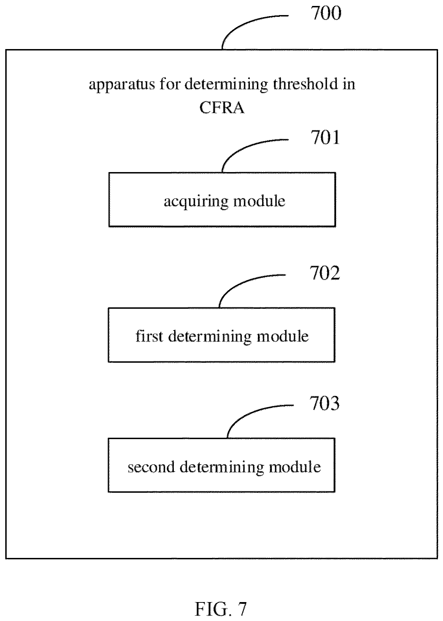

FIG. 7 is a schematic block diagram of an apparatus for determining a threshold in CFRA according to some embodiments of the disclosure. The method is executed by a UE. As illustrated in FIG. 7, the apparatus for determining a threshold in CFRA may include: an acquiring module, a first determining module, and a second determining module.

The acquiring module is configured to acquire a first version of a CBRA configuration and/or a second version of a CBRA configuration sent by a network side device. The first version is earlier than the second version.

The first determining module is configured to, in response to the UE triggering the CFRA, determine whether an RSRP threshold is configured in a CFRA configuration.

The second determining module is configured to, in response to the RSRP threshold being not configured in the CFRA configuration, determine a target version, the target version including the first version and/or the second version, and determine a target RSRP threshold according to an RSRP threshold in the target version of the CBRA configuration.

In conclusion, in the apparatus for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

Optionally, according to embodiments of the disclosure, the apparatus is also configured to: in response to the RSRP threshold being configured in the CFRA configuration, determine the target RSRP threshold according to an RSRP threshold in the CFRA configuration.

Optionally, according to embodiments of the disclosure, the first version includes at least one version, and one version in the first version corresponds to at least one CBRA configuration; the second version includes at least one version, and one version in the second version corresponds to at least one CBRA configuration.

Optionally, according to embodiments of the disclosure, the RSRP threshold includes at least one of: an SUL selection threshold; or an SSB selection threshold.

Optionally, according to embodiments of the disclosure, the CBRA configuration includes at least one of: a 2-step CBRA configuration; or a 4-step CBRA configuration

Optionally, according to embodiments of the disclosure, a relationship between the first version of the CBRA configuration and the second version of the CBRA configuration includes at least one of: the second version of the CBRA configuration being independently configured with the same RSRP threshold as configured in the first version of the CBRA configuration; the second version of the CBRA configuration being independently configured with the RSRP threshold different from that configured in the first version of the CBRA configuration; or the second version of the CBRA configuration being not configured with the RSRP threshold but reusing the RSRP threshold configured in the first version of the CBRA configuration.

Optionally, according to embodiments of the disclosure, the acquiring module is also configured to: acquire the CBRA configuration sent by the network side device through a system message.

Optionally, according to embodiments of the disclosure, the second determining module is further configured to: determine the target version according to an indication of the network side device; determine the target version according to a protocol agreement; determine the target version according to a UE capability; or determine the target version by the UE autonomously.

Optionally, according to embodiments of the disclosure, the second determining module is further configured to: determine the first version as the target version; determine the second version as the target version; or determine the first version and the second version as the target version.

Optionally, according to embodiments of the disclosure, the second determining module is further configured to: in response to the target version corresponding to one CBRA configuration, determine directly the RSRP threshold in the target version of the CBRA configuration as the target RSRP threshold; and in response to the target version corresponding to at least one CBRA configuration, determine the target RSRP threshold from RSRP thresholds in the target version of the at least one CBRA configuration.

Optionally, according to embodiments of the disclosure, the apparatus is also configured to: determine the target RSRP threshold from the RSRP thresholds in the target version of the at least one CBRA configuration according to an indication of the network side device; determine the target RSRP threshold from the RSRP thresholds in the target version of the at least one CBRA configuration according to a UE capability; determine the RSRP threshold in the first version of the CBRA configuration as the target RSRP threshold; determine the target RSRP threshold from the RSRP thresholds in the target version of the at least one CBRA configuration according to a predefined rule; or determine by the UE autonomously the target RSRP threshold from the RSRP thresholds in the target version of the at least one CBRA configuration.

Optionally, according to embodiments of the disclosure, the predefined rule includes at least one of: determining a maximum RSRP threshold as the target RSRP threshold; or determining a minimum RSRP threshold as the target RSRP threshold.

Optionally, according to embodiments of the disclosure, the CFRA includes at least one of: CFRA triggered according to a BFR; CFRA triggered according to an SI request; or CFRA triggered according to a handover.

Optionally, according to embodiments of the disclosure, a type of the CFRA includes at least one of: 2-step CFRA; or 4-step CFRA.

Optionally, according to embodiments of the disclosure, the apparatus is also configured to: acquire a CFRA configuration sent by the network side device.

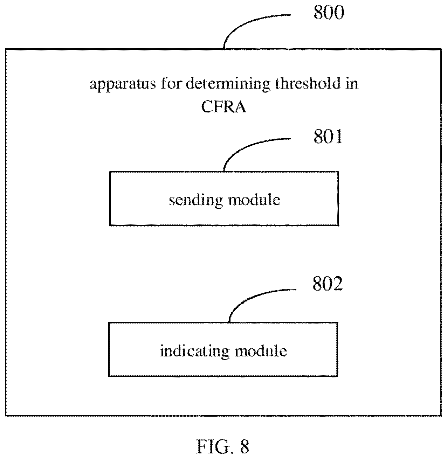

FIG. 8 is a schematic block diagram of another apparatus for determining a threshold in CFRA according to some embodiments of the disclosure. The method is executed by a UE. As illustrated in FIG. 8, the apparatus for determining a threshold in CFRA may include: a sending module and an indicating module.

The sending module is configured to send a CBRA configuration to a UE. The CBRA configuration includes at least one of a first version of a CBRA configuration and a second version of a CBRA configuration. The first version is earlier than the second version.

The indicating module is configured to, in response to the UE triggering the CFRA and no RSRP threshold configured in a CFRA configuration, indicate a target version to the UE, the target version comprising the first version and/or the second version.

In conclusion, in the apparatus for determining a threshold in CFRA according to embodiments of the disclosure, the UE may acquire the CBRA configuration sent by the network side device, the CBRA configuration includes the at least one of the first version of the CBRA configuration and the second version of the CBRA configuration, and the first version is earlier than the second version; in response to the UE triggering the CFRA, determine whether the RSRP threshold is configured in the CFRA configuration; and in response to the RSRP threshold being configured in the CFRA configuration, determine the RSRP threshold configured in the CFRA configuration as the target RSRP threshold, and in response to the RSRP threshold being not configured in the CFRA configuration, determine the target version, the target version including the first version and/or the second version, and determine the target RSRP threshold according to the RSRP threshold in the target version of the CBRA configuration. It may be seen that, the method for determining the threshold is provided according to embodiments of the disclosure, which is used to determine the target RSRP threshold for the CFRA from the CBRA configuration(s).

Optionally, according to embodiments of the disclosure, the first version includes at least one version, and one version in the first version corresponds to at least one CBRA configuration; the second version includes at least one version, and one version in the second version corresponds to at least one CBRA configuration.

Optionally, according to embodiments of the disclosure, the threshold includes at least one of: an SUL selection threshold; or an SSB selection threshold.

Optionally, according to embodiments of the disclosure, the CBRA configuration includes at least one of: a 2-step CBRA configuration; or a 4-step CBRA configuration.

Optionally, according to embodiments of the disclosure, a relationship between the first version of the CBRA configuration and the second version of the CBRA configuration includes at least one of: the second version of the CBRA configuration being independently configured with a same RSRP threshold as configured in the first version of the CBRA configuration; the second version of the CBRA configuration being independently configured with an RSRP threshold different from that configured in the first version of the CBRA configuration; or the second version of the CBRA configuration being not configured with an RSRP threshold but reusing an RSRP threshold configured in the first version of the CBRA configuration.

Optionally, according to embodiments of the disclosure, the sending module is further configured to: send the CBRA configuration to the UE through a system message.

Optionally, according to embodiments of the disclosure, the indicating module is also configured to: determine the first version as the target version; determine the second version as the target version; or determine the first version and the second version as the target version.

Optionally, according to embodiments of the disclosure, the apparatus is also configured to: in response to the target version corresponding to at least one CBRA configuration, determine a target RSRP threshold from RSRP thresholds in the target version of the at least one CBRA configuration, and indicating the target RSRP threshold to the UE.

Optionally, according to embodiments of the disclosure, the CFRA includes at least one of: CFRA triggered according to BFR; CFRA triggered according to an SI request; or CFRA triggered according to a handover.

Optionally, according to embodiments of the disclosure, a type of the CFRA includes at least one of: 2-step CFRA; or 4-step CFRA.

Optionally, according to embodiments of the disclosure, the apparatus is also configured to: send a CFRA configuration to the UE.

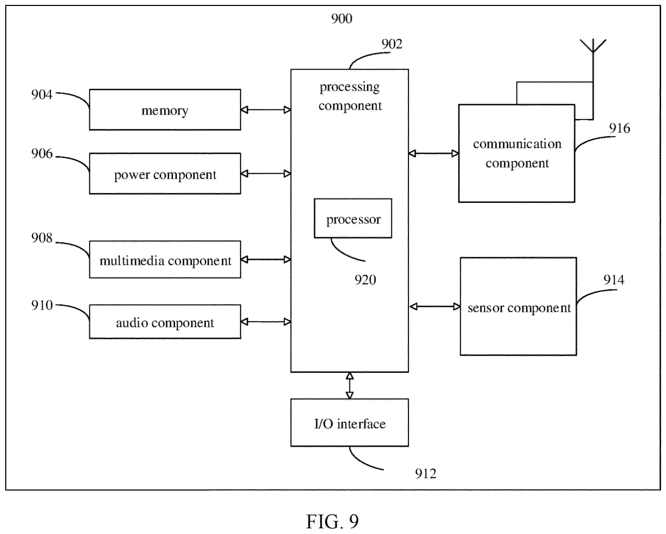

FIG. 9 is a block diagram of a UE 900 according to some embodiments of the disclosure. For example, the UE 900 may be a mobile phone, a computer, a digital broadcast terminal device, a messaging device, a game console, a tablet device, a medical device, a fitness device, a personal digital assistant, and the like.

Referring to FIG. 9, the UE 900 may include at least one of the following components: a processing component 902, a memory 904, a power component 906, a multimedia component 908, an audio component 910, an input/output (I/O) interface 912, a sensor component 913, and a communication component 916.

The processing component 902 typically controls overall operations of the UE 900, such as the operations associated with display, telephone calls, data communications, camera operations, and recording operations. The processing component 902 may include at least one processor 920 to execute instructions to complete all or part of the steps of the above-mentioned methods. Additionally, the processing component 902 may include one or more modules which facilitate the interaction between the procedureing component 902 and other components. For example, the processing component 902 may include a multimedia module to facilitate interaction between the multimedia component 908 and the processing component 902.

The memory 904 is configured to store various types of data to support operations at the UE 900. Examples of such data include instructions for any applications or methods operated on the UE 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the UE 900. The power component 906 may include a power management system, one or more power sources, and any other components associated with the generation, management, and distribution of power in the UE 900.

The multimedia component 908 includes a screen providing an output interface between the UE 900 and the user. According to some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the UE 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC), which is configured to receive an external audio signal when the UE 900 is in an operation mode, such as a call mode, a recording mode, and a voice recognition mode. The received audio signal may be further stored in the memory 904 or transmitted via the communication component 916. According to some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 913 includes at least one sensor to provide status assessments of various aspects of the UE 900. For instance, the sensor component 914 may detect an open/closed status of the UE 900, relative positioning of components, e.g., the display and the keypad, of the UE 900, a change in position of the UE 900 or a component of the UE 900, a presence or absence of user contact with the UE 900, an orientation or an acceleration/deceleration of the UE 900, and a change in temperature of the UE 900. The sensor component 914 may include a proximity sensor configured to detect the presence of nearby objects without any physical contact. The sensor component 914 may also include a light sensor, such as a CMOS or CCD image sensor, for use in imaging applications. According to some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the UE 900 and other devices. The UE 900 can access a wireless network based on a communication standard, such as WiFi, 2G, or 3G, or a combination thereof. According to some embodiments, the communication component 916 receives a broadcast signal or broadcast associated information from an external broadcast management system via a broadcast channel. According to some embodiments, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

According to some embodiments, the UE 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

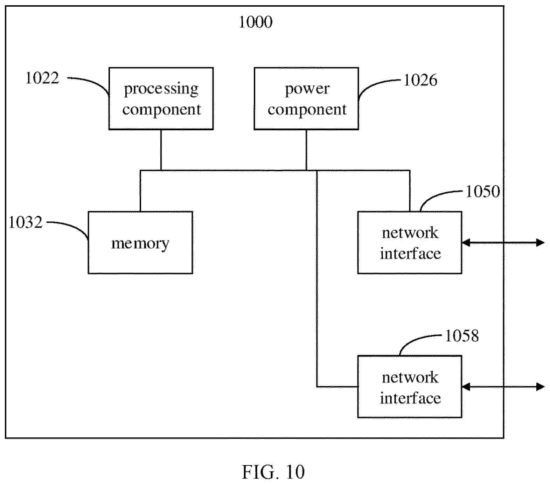

FIG. 10 is a block diagram of a network side device 1000 according to some embodiments of the disclosure. For example, the network side device 1000 may be provided as a network side device. Referring to FIG. 10, the network side device 1000 includes a processing component 1011, which further includes at least one processor, and a memory resource represented by a memory 1032 for storing instructions executable by the processing component 1022, such as an application program. The application program stored in the memory 1032 may include one or more modules each corresponding to a set of instructions. In addition, the processing component 1010 is configured to execute instructions, so as to execute any of the aforementioned methods applied to the network side device, for example, the method in FIG. 1.

The network side device 1000 may also include a power component 1026 configured to perform the power management of the network side device 1000, a wired or wireless network interface 1050 configured to connect the network side device 1000 to the network, and an I/O interface 1058. The network side device 1000 can operate based on the operating system stored in the memory 1032, such as Windows Server^{™}, Mac OS X^{™}, Unix^{™}, Linux^{™}, Free BSD^{™}, or similar.

According to the above embodiments of the disclosure, the methods according to the embodiments of the disclosure are introduced from the perspectives of the network side device and the UE respectively. In order to implement the various functions in the methods according to the above embodiments of the disclosure, the network side device and the UE may include a hardware structure and a software module, and implement the above functions in the form of the hardware structure, the software module, or the hardware structure plus the software module. A certain function in the above-mentioned functions may be implemented in the form of the hardware structure, the software module, or the hardware structure plus the software module.

According to the above embodiments of the disclosure, the methods according to the embodiments of the disclosure are introduced from the perspectives of the network side device and the UE respectively. In order to implement the various functions in the methods according to the above embodiments of the disclosure, the network side device and the UE may include a hardware structure and a software module, and implement the above functions in the form of the hardware structure, the software module, or the hardware structure plus the software module. A certain function in the above-mentioned functions may be implemented in the form of the hardware structure, the software module, or the hardware structure plus the software module.

A communication device is provided according to some embodiments of the disclosure. The communication device may include a transceiver module and a processing module. The transceiver module may include a transmitting module and/or a receiving module. The transmitting module is used to realize the transmitting function. The receiving module is used to realize the receiving function. The transceiver module may realize the transmitting function and/or the receiving function.

The communication device may be a terminal device (such as the terminal device in the foregoing method embodiments), or a device in the terminal device, or a device that may be matched and used with the terminal device. Alternatively, the communication device may be a network device, or a device in the network device, or a device that may be matched and used with the network device.

Another communication device is provided according to some embodiments of the disclosure. The communication device may be a network device, or a terminal device (such as the terminal device in the aforementioned method embodiments), or a chip, a chip system, or a processor that supports the network device to implement the above methods, or a chip, a chip system, or a processor that supports the terminal device to implement the above methods. The device may be used to implement the methods described in the above method embodiments, and for details, refer to the descriptions in the above method embodiments.

A communications device may include one or more processors. The processor may be a general purpose processor or a special purpose processor or the like. For example, it may be a baseband processor or a central processing unit. The baseband processor may be used to process communication protocols and communication data, and the central processing unit may be used to control communication devices (such as the network side device, baseband chip, terminal device, terminal device chip, distributed unit (DU), central unit (CU), etc.), execute computer programs, and process the data of computer programs.

Optionally, the communication device may further include one or more memories, on which computer programs may be stored. The processor executes the computer programs, so that the communication device executes the methods described in the foregoing method embodiments. Optionally, data may also be stored in the memory. The communication device and the memory may be set separately or integrated together.

Optionally, the communication device may further include a transceiver and an antenna. The transceiver may be referred to as a transceiver unit, a transmitter/receiver, or a transceiver circuit, etc., and is used to implement a transceiver function. The transceiver may include a receiver and a transmitter. The receiver may be called a receiving device or a receiving circuit for realizing a receiving function. The transmitter may be called a transmitting device or a transmitting circuit for realizing a transmitting function.

Optionally, the communication device may further include one or more interface circuits. The interface circuit is used to receive code instructions and transmit them to the processor. The processor executes the code instructions to enable the communication device to execute the methods described in the foregoing method embodiments.

The communication device is a terminal device (such as the terminal device in the foregoing method embodiments): the processor is configured to execute any of the methods in FIGS. 1-4.

The communication device is a network device: the transceiver is used to execute any of the methods in FIGS. 5-7.

In an implementation, the processor may include a transceiver for implementing receiving and transmitting functions. For example, the transceiver may be a transceiver circuit, or an interface, or an interface circuit. The transceiver circuit, interface, or interface circuit for realizing the functions of receiving and sending may be separated or integrated together. The above-mentioned transceiver circuit, interface, or interface circuit may be used for reading and writing code/data, or the above-mentioned transceiver circuit, interface, or interface circuit may be used for signal transmission or transfer.

In an implementation, the processor may store a computer program, and the computer program runs on the processor to enable the communication device to execute the methods described in the foregoing method embodiments. A computer program may be embedded in a processor, in which case the processor may be implemented by hardware.

In an implementation, the communication device may include a circuit, and the circuit may implement the function of transmitting or receiving or communicating in the foregoing method embodiments. The processor and transceiver described in the disclosure may be implemented in an integrated circuits (IC), an analog IC, a radio frequency integrated circuit (RFIC), a mixed-signal IC, an application specific integrated circuit (ASIC), a printed circuit board (PCB), electronic equipment, or the like. The processor and the transceiver may also be fabricated using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal device (such as the terminal device in the foregoing method embodiments), but the scope of the communication device described in this disclosure is not limited thereto, and the structure of the communication device may not be limited. The communication device may be a stand-alone device or may be part of a larger device. For example, the communication device may be:
(1) a stand-alone IC, or a chip, or a chip system, or a chip subsystem;
(2) a set of one or more ICs, optionally, the set may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handset, a mobile unit, an in-vehicle device, a network device, a cloud device, an artificial intelligence device, etc.;
(6) others.

For the case where the communications device may be a chip or a system on chip. The chip includes a processor and an interface. The number of processors may be one or more, and the number of interfaces may be more than one.

Optionally, the chip also includes a memory, which is used to store necessary computer programs and data.

Those skilled in the art may also understand that various illustrative logical blocks and steps listed according to the embodiments of the disclosure may be implemented in electronic hardware, computer software, or a combination thereof. Whether such function is implemented in hardware or software depends on specific applications and overall system design requirements. Those skilled in the art may use various manners to implement functions for each specific application, but such implementation should not be understood as exceeding the protection scope of the embodiments of the disclosure.

A system for determining a duration of a sidelink is provided according to embodiments of the disclosure. The system includes a communication device as a terminal device (such as the first terminal device in the method embodiments above) in the foregoing embodiments and a communication device as a network device, Alternatively, the system includes a communication device as a terminal device (such as the first terminal device in the method embodiments above) in the foregoing embodiments and a communication device as a network device.

A readable storage medium on which instructions are stored is provided according to the disclosure. When the instructions are executed by a computer, the functions of any one of the above method embodiments are realized.

A computer program product is provided according to the disclosure. The product implements the functions of any one of the above method embodiments when the computer program product is executed by a computer.

According to the above-mentioned embodiments, it may be implemented in whole or in part by software, hardware, firmware, or any combination thereof. When it is implemented in software, it may be implemented in whole or in part in a form of computer program product. The computer program product includes one or more computer programs. When the computer programs are loaded and executed on the computer, flows or functions according to the embodiments of the disclosure may be generated in whole or in part. The computer may be a general purpose computer, a special purpose computer, a computer network, or other programmable device. The computer programs may be stored on a computer-readable storage medium or transferred from one computer-readable storage medium to another computer-readable storage medium, for example, the computer programs may be transferred from a website site, a computer, a server, or a data center over a wire (e.g. coaxial cable, optical fiber, digital subscriber line (DSL)) or wireless (e.g. infrared, wireless, microwave) means to another website site, another computer, another server, or another data center. The computer-readable storage medium may be any available medium that may be accessed by a computer or a data storage device such as a server, a data center, or the like that includes an integration of one or more available media. The available medium may be a magnetic medium (e.g., floppy disk, hard disk, magnetic tape), an optical medium (e.g., high-density digital video disc (DVD)), a semiconductor medium (e.g., solid state disk (SSD)), or the like

Those skilled in the art may understand that the first, second, and other numeral numbers involved in the disclosure are only for the convenience of description, and are not used to limit the scope of the embodiments of the disclosure, which also represent a sequence.

At least one in this disclosure may also be described as one or more, which is not limited in this disclosure. A plurality of or multiple in this disclosure may be two, three, four, or more, which is not limited in this disclosure. In the embodiments of the disclosure, for a type of technical features, the technical features are distinguished by "first", "second", "third", "A", "B", "C" and "D", etc. There is no order or order of magnitude for the technical features described in "first", "second", "third", "A", "B", "C" and "D", etc.

Other embodiments of the disclosure will be apparent to those skilled in the art from consideration of the specification and practice of the disclosure disclosed herein. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a threshold in contention-free random access (CFRA), performed by a user equipment (UE), the method comprising:
acquiring a contention-based random access (CBRA) configuration sent by a network side device, the CBRA configuration comprising at least one of a first version of a CBRA configuration and a second version of a CBRA configuration, the first version being earlier than the second version;
in response to the UE triggering the CFRA, determining whether a reference signal received power (RSRP) threshold is configured in a CFRA configuration;
in response to the RSRP threshold being not configured in the CFRA configuration, determining a target version, the target version comprising the first version and/or the second version, and determining a target RSRP threshold according to an RSRP threshold in the target version of the CBRA configuration.

2. The method according to claim 1, further comprising: in response to the RSRP threshold being configured in the CFRA configuration, determining the target RSRP threshold according to an RSRP threshold in the CFRA configuration.

3. The method according to claim 1, wherein the first version comprises at least one version, and one version in the first version corresponds to at least one CBRA configuration; the second version comprises at least one version, and one version in the second version corresponds to at least one CBRA configuration.

4. The method according to claim 1, wherein the RSRP threshold comprises at least one of:
a supplementary uplink (SUL) selection threshold; or
a synchronization signal block (SSB) selection threshold.

5. The method according to claim 1, wherein the CBRA configuration comprises at least one of:
a 2-step CBRA configuration; or
a 4-step CBRA configuration.

6. The method according to claim 1, wherein a relationship between the first version of the CBRA configuration and the second version of the CBRA configuration comprises at least one of:
the second version of the CBRA configuration being independently configured with the same RSRP threshold as configured in the first version of the CBRA configuration;
the second version of the CBRA configuration being independently configured with the RSRP threshold different from that configured in the first version of the CBRA configuration; or
the second version of the CBRA configuration being not configured with the RSRP threshold but reusing the RSRP threshold configured in the first version of the CBRA configuration.

7. The method according to claim 1, wherein acquiring the CBRA configuration sent by the network side device comprises:
acquiring the CBRA configuration sent by the network side device through a system message.

8. The method according to claim 1, wherein determining the target version comprises at least one of:
determining the target version according to an indication of the network side device;
determining the target version according to a protocol agreement;
determining the target version according to a UE capability; or
determining the target version by the UE autonomously.

9. The method according to claim 1, wherein determining the target version comprises at least one of:
determining the first version as the target version;
determining the second version as the target version; or
determining the first version and the second version as the target version.

10. The method according to claim 3, wherein determining the target RSRP threshold according to the RSRP threshold in the target version of the CBRA configuration comprises:
in response to the target version corresponding to one CBRA configuration, determining directly the RSRP threshold in the target version of the CBRA configuration as the target RSRP threshold; and
in response to the target version corresponding to at least one CBRA configuration, determining the target RSRP threshold from RSRP thresholds in the target version of the at least one CBRA configuration.

11. The method according to claim 10, wherein determining the target RSRP threshold from the RSRP thresholds in the target version of the at least one CBRA configuration comprises at least one of:
determining the target RSRP threshold from the RSRP thresholds in the target version of the at least one CBRA configuration according to an indication of the network side device;
determining the target RSRP threshold from the RSRP thresholds in the target version of the at least one CBRA configuration according to a UE capability;
determining the RSRP threshold in the first version of the CBRA configuration as the target RSRP threshold;
determining the target RSRP threshold from the RSRP thresholds in the target version of the at least one CBRA configuration according to a predefined rule; or
determining by the UE autonomously the target RSRP threshold from the RSRP thresholds in the target version of the at least one CBRA configuration.

12. The method according to claim 11, wherein the predefined rule comprises at least one of:
determining a maximum RSRP threshold as the target RSRP threshold; or
determining a minimum RSRP threshold as the target RSRP threshold.

13. The method according to claim 1, wherein the CFRA comprises at least one of:
CFRA triggered according to a beam failure recovery (BFR);
CFRA triggered according to a system information (SI) request; or
CFRA triggered according to a handover.

14. The method according to claim 1, wherein a type of the CFRA comprises at least one of:
2-step CFRA; or
4-step CFRA.

15. The method according to claim 1, further comprising:
acquiring a CFRA configuration sent by the network side device.

16. A method for determining a threshold in contention-free random access (CFRA), performed by a network side device, the method comprising:
sending a contention-based random access (CBRA) configuration to a user equipment (UE), the CBRA configuration comprising at least one of a first version of a CBRA configuration and a second version of a CBRA configuration, the first version being earlier than the second version; and
in response to the UE triggering the CFRA and no reference signal received power (RSRP) threshold configured in a CFRA configuration, indicating a target version to the UE, the target version comprising the first version and/or the second version.

17. The method according to claim 16, wherein the first version comprises at least one version, and one version in the first version corresponds to at least one CBRA configuration; the second version comprises at least one version, and one version in the second version corresponds to at least one CBRA configuration.

18. The method according to claim 16, wherein the threshold comprises at least one of:
a supplementary uplink (SUL) selection threshold; or
a synchronization signal block (SSB) selection threshold.

19. The method according to claim 16, wherein the CBRA configuration comprises at least one of:
a 2-step CBRA configuration; or
a 4-step CBRA configuration.

20. The method according to claim 16, wherein a relationship between the first version of the CBRA configuration and the second version of the CBRA configuration comprises at least one of:
the second version of the CBRA configuration being independently configured with a same RSRP threshold as configured in the first version of the CBRA configuration;
the second version of the CBRA configuration being independently configured with an RSRP threshold different from that configured in the first version of the CBRA configuration; or
the second version of the CBRA configuration being not configured with an RSRP threshold but reusing an RSRP threshold configured in the first version of the CBRA configuration.

21. The method according to claim 16, wherein sending the CBRA configuration to the UE comprises:
sending the CBRA configuration to the UE through a system message.

22. The method according to claim 16, wherein determining the target version comprises at least one of:
determining the first version as the target version;
determining the second version as the target version; or
determining the first version and the second version as the target version.

23. The method according to claim 17, further comprising:
in response to the target version corresponding to at least one CBRA configuration, determining a target RSRP threshold from RSRP thresholds in the target version of the at least one CBRA configuration, and indicating the target RSRP threshold to the UE.

24. The method according to claim 16, wherein the CFRA comprises at least one of:
CFRA triggered according to a beam failure recovery (BFR);
CFRA triggered according to a system information (SI) request; or
CFRA triggered according to a handover.

25. The method according to claim 16, wherein a type of the CFRA comprises at least one of:
2-step CFRA; or
4-step CFRA.

26. The method according to claim 16, further comprising:
sending a CFRA configuration to the UE.

27. An apparatus for determining a threshold in contention-free random access (CFRA), comprising:
an acquiring module, configured to acquire a contention-based random access (CBRA) configuration sent by a network side device, the CBRA configuration comprising at least one of a first version of a CBRA configuration and a second version of a CBRA configuration, the first version being earlier than the second version;
a first determining module, configured to, in response to the UE triggering the CFRA, determine whether a reference signal received power (RSRP) threshold is configured in a CFRA configuration; and
a second determining module, configured to, in response to the RSRP threshold being not configured in the CFRA configuration, determine a target version, the target version comprising the first version and/or the second version, and determine a target RSRP threshold according to an RSRP threshold in the target version of the CBRA configuration.

28. An apparatus for determining a threshold in contention-free random access (CFRA), comprising:
a sending module, configured to send a contention-based random access (CBRA) configuration to a user equipment (UE), the CBRA configuration comprising at least one of a first version of a CBRA configuration and a second version of a CBRA configuration, the first version being earlier than the second version; and
an indicating module, configured to, in response to the UE triggering the CFRA and no reference signal received power (RSRP) threshold configured in a CFRA configuration, indicate a target version to the UE, the target version comprising the first version and/or the second version.

29. A communication device, comprising a processor and a memory, wherein a computer program is stored in the memory, and the processor is configured to execute the computer program stored in the memory to cause the device to perform the method according to any one of claims 1 to 15.

30. A communication device, comprising a processor and a memory, wherein a computer program is stored in the memory, and the processor is configured to execute the computer program stored in the memory to cause the device to perform the method according to any one of claims 16 to 26.

31. A communication device, comprising a processor and an interface circuit;
wherein the interface circuit is configured to receive code instructions and transmit them to the processor; and
the processor is configured to execute the code instructions to execute the method according to any one of claims 1 to 15.

32. A communication device, comprising a processor and an interface circuit;
wherein the interface circuit is configured to receive code instructions and transmit them to the processor; and
the processor is configured to execute the code instructions to execute the method according to any one of claims 16 to 26.

33. A computer-readable storage medium for storing instructions that, when executed, cause the method according to any one of claims 1 to 15 to be implemented.

34. A computer-readable storage medium for storing instructions that, when executed, cause the method according to any one of claims 16 to 26 to be implemented.
